(19) Europäisches Patentamt
European Patent Office
Office européen des brevets

(11) EP 2 410 020 B1

(12) EUROPÄISCHE PATENTSCHRIFT

(45) Veröffentlichungstag und Bekanntmachung des Hinweises auf die Patenterteilung:
**30.01.2013 Patentblatt 2013/05**

(51) Int Cl.:
***C08L 77/06*** *(2006.01)* ***C08G 69/26*** *(2006.01)*

(21) Anmeldenummer: **10170578.8**

(22) Anmeldetag: **23.07.2010**

# (54) Teilaromatische Polyamid-Formmassen und deren Verwendungen

Partially aromatic polyamide moulding compositions and their applications

Compositions à mouler à base de polyamide partiellement aromatique et leurs utilisations

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**25.01.2012 Patentblatt 2012/04**

(73) Patentinhaber: **EMS-PATENT AG**
**7013 Domat / Ems (CH)**

(72) Erfinder:
- **Bayer, Andreas, Dr. rer. nat.**
  **7013 Domat/Ems (CH)**
- **Hewel, Manfred, Dr. rer. nat.**
  **7013 Domat/Ems (CH)**

(74) Vertreter: **Bremi, Tobias Hans**
**Isler & Pedrazzini AG**
**Postfach 1772**
**8027 Zürich (CH)**

(56) Entgegenhaltungen:
**US-A1- 2001 003 766**
**US-A1- 2004 242 737**
**US-A1- 2008 274 355**
**US-A1- 2009 062 452**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 410 020 B1

## Beschreibung

Die vorliegende Erfindung betrifft flammgeschützte Polyamid-Formmassen auf Basis eines Terephthalsäure-Copolyamids sowie Verfahren zu deren Herstellung und Verwendungen davon.

STAND DER TECHNIK

Im Elektro- und Elektronikbereich werden polymere Materialien benötigt,

- die auch nach Wasseraufnahme mit bleifreiem Lot bei 260°C Oberflächentemperatur ohne Blasen (Blister) lötbar sind,
- die halogenfrei flammgeschützt sind und die UL94-Klassifikation V0 sicher erreichen,
- die eine Reissdehnung von mindestens 5% aufweisen,
- die bei niedrigen Drücken und hohen Fliesslängen ohne Formablagerungen gut verarbeitbar sind.

Flammgeschützt ausgerüstete Compounds aliphatischer Polyamide haben zu tiefe Schmelzpunkte und/oder eine zu hohe Wasseraufnahme, so dass sie in konditioniertem Zustand eine ungenügende Lötbarkeit aufweisen. Darüber hinaus besitzen z.B. mit Flammschutz ausgerüstete, unverstärkte PA66- und PA6-Compounds ungenügende HDT-Werte.
Flammgeschützt ausgerüstete Compounds auf Basis teilaromatischer Polyamide des Typs PA6T/66 gemäss JP 2928325 haben ausreichend hohe Schmelzpunkte, nehmen aber relativ viel Wasser auf. Sie lassen sich im trockenen Zustand löten und erreichen maximal ein Feuchtigkeitssensitivitätslevel (Moisture Sensitivity Level SML gemäss Joint Industry Standard IPC/JEDEC J-STD-020D.1) von 2. D.h. sie können vor dem Löten maximal für 168 Stunden bei 85°C und 60% relativer Feuchte konditioniert werden. Dies bedeutet in der Regel, dass die elektronischen Bauteile aus diesen Materialien nicht unbeschränkt lagerbar sind und bis zum Löten feuchtigkeitsdicht verpackt sein müssen. Unverstärkte, flammgeschützte Formmassen weisen eine zu geringe Reissdehnung auf. Ähnlich sind aus der US 2001/003766 Mischungen aus einem aromatischen Polyamid mit einem erheblichen Anteil an Füllstoff und einem Schlagzähmodifikator bekannt. Als Schlagzähmodifikatoren können dabei Ionomere eingesetzt werden, und die Mischungen können angeblich beispielsweise für elektronische Bauteile eingesetzt werden. Es wird erwähnt, dass es möglich ist, einem solchen Polyamid Additive wie z.B. Pigmente hinzuzufügen Abgesehen davon, dass in diesem Dokument von Lötprozessen nicht die Rede ist, sind die in diesem Dokument vorgeschlagenen Polyamide für Lötprozesse ohnehin wegen der zu hohen Wasseraufnahme und der zu grossen amorphen Anteile und damit zu starkem Blistering (Aufschäumen) allesamt nicht geeignet, obwohl sie hohe Schmelzpunkte von z.B. 305 Grad Celsius aufweisen. Darüber hinaus weisen die mit Glasfasern verstärkten Produkte eine zu geringe Reissdehnung auf.
In der EP 1 988 113 werden Polyamide mit 40 bis 95 Mol-% 10T-Einheiten, gebildet aus den Monomeren 1,10-Decandiamin und Terephthalsäure, und 5 bis 60 Mol-% 6T-Einheiten, gebildet aus den Monomeren 1,6-Hexandiamin und Terephthalsäure, beschrieben. Diese Polyamide haben hohe Wärmeformbeständigkeiten, gute Verarbeitbarkeit, niedrige Wasseraufnahme, unveränderte mechanische Eigenschaften nach Wasseraufnahme, gute Oberflächenqualität der glasfaserverstärkten Produkte und hohe Dimensionsstabilität. Die Lötbarkeit bei 260°C nach Wasseraufnahme ist deutlich besser als die von teilaromatischen Polyamiden des Typs PA6T/66. Die Lötbarkeit der elektrischen und elektronischen Bauteile aus glasfaserverstärktem PA10T/6T ist gegeben, d.h. sie können das höchste Feuchtigkeitssensitivitätslevel (Moisture Sensitivity Level SML gemäss Joint Industry Standard IPC/JEDEC J-STD-020D.1) von 1 bei geeignetem Design erreichen. Mit üblichen Schlagzähmodifikatoren, wie z.B. EPR oder EPDM, lässt sich zwar die Reissdehnung dieser Formmassen verbessern, die so modifizierten Formmassen sind aber nicht mehr sicher V0 gemäss UL94-Klassifikation. und die Lötbarkeit ist nicht gewährleistet.
Die US3845163 beschreibt Blends aus 60 bis 85 Gew.-% Polyamid und 15 bis 40 Gew.-% Ionomeren auf Basis von $\alpha$-Olefinen und $\alpha,\beta$-ungesättigten Carbonsäuren, die eine verbesserte Bindenahtfestigkeit aufweisen, wenn die freien Carboxylgruppen zu mindestens 10% mit Metallionen neutralisiert sind. Gearbeitet werden Blends aus PA66 und Ionomeren aus Ethylen und Methacrylsäure, neutralisiert mit Natrium oder ZinkIonen. Diese Blends können nicht bei 260°C gelötet werden und haben keine Flammschutzausrüstung.
EP0356978A2 betrifft Formmasen auf Basis von PA6, PA66 und PA66/6 und 10-25 Gew.-% Ionomer, die steif und zäh sowie frei von Formablagerungen sein sollen. Die verwendeten Ionomere sind teilweise mit Metallionen neutralisiert und setzen sich aus Ethylen, Methacrylsäure und Alkylacrylaten, insbesondere Butylacrylat zusammen. Diese Formmassen sind nicht lötbar und weisen keinen Flammschutz aus.

DARSTELLUNG DER ERFINDUNG

Es ist daher Aufgabe der Erfindung flammgeschützte Polyamid-Formmassen, insbesondere unverstärkte, halogenfrei flammgeschützte Polyamid-Formmassen zur Verfügung zu stellen, aus denen elektrische und/oder elektronische Bauteile hergestellt werden können, die sich insbesondere bei 260°C und eventuell höheren Temperaturen nach Wasseraufnahme und kritischen Designs der Bauteile sicher löten lassen, das heisst insbesondere keine Blasen beim Lötprozess bilden, eine Reissdehnung von mindestens 5% aufweisen und sicher die UL94-Klassifikation V0 erreichen.
Die Aufgabe wird gelöst durch Polyamidformmassen nach Anspruch 1, das heißt im weitesten Sinne auf Basis von teilaromatischen, teilkristallinen Polyamiden mit einem spezifischen Schmelzpunktbereich, einer wirksamen Menge von teilweise oder ganz mit Metallionen neutralisierten Ionomeren und Flammschutzmittel, vorzugsweise auf Basis von Phosphinsäure- bzw. Diphosphinsäure-Salzen.
Die Lötbarkeit (Definition siehe nachfolgend) der erfindungsgemässen Formmassen ist wenigstens 80%, bevorzugtermassen grösser als 85%. Die Lötbarkeit wird definiert als relativer Anteil der positiv geprüften Stäbe drei verschiedener Dicken ohne Blasen (Blister) bei 6 verschiedenen Prüfbedingungen nach 168h Konditionierung bei 85°C und 85% relativer Feuchte gemäss Joint Industry Standard IPC/JEDEC J-STD-020D.1.
Damit die unverstärkten Formmassen den hohen Temperaturanforderungen beim Lötprozess gerecht werden können, müssen die zugrundeliegenden Polyamide einen genügend hohen Schmelzpunkt aufweisen, und sollten zudem nicht amorph sein. So haben die erfindungsgemässen Polyamide (Komponente (A)) einen Schmelzpunkt im Bereich von 270 bis 320°C, bevorzugt im Bereich von 280 bis 315°C und insbesondere im Bereich von 290 bis 310°C.
Die Polyamide bestehen bevorzugtermassen aus Terephthalsäure (gegebenenfalls wenigstens teilweise ersetzt durch Naphthalindicarbonsäure) und mindestens einem Diamin, ausgewählt aus der Gruppe bestehend aus Butandiamin, Pentandiamin, Hexandiamin, Octandiamin, Methyloctandiamin, Nonandiamin, Decandiamin, Undecandiamin und Dodecandiamin. Terephthalsäure kann zu höchstens 50 mol-% durch Isophthalsäure ersetzt werden.
Bevorzugte teilaromatische Polyamide sind dabei insbesondere 5T/5I, 6T/9T, 6T/10T, 6T/12T, 10T/6T, 10T/10I, 10T/10I/6T, 10T/6I, 6T/10T/6I, 6T/6I/10T/10I, 6T/10T/10I, 9T, 10T, 12T sowie Copolyamide aus TPS, IPS, HMDA und einem weiteren aliphatischen Diamin mit 9 bis 12 Kohlenstoffatomen, insbesondere zum Beispiel Copolyamide aus TPS, IPS, HMDA und Decandiamin.
Gemäß einer weiteren bevorzugten Ausführungsform sind dabei die Systeme 6T und/oder 6T/6I respektive 6I/6T ausgeschlossen, das heißt die allgemeine Definition der Komponente (A) gilt mit der Maßgabe, dass diese spezifischen Systeme ausgeschlossen sind:
Ganz gezielt ist vorzugsweise die vorgeschlagene Polyamid-Formmasse im wesentlichen frei von Füll- und/oder Verstärkungsmittel, insbesondere frei von Glasfasern, Kohlefasern etc. Frei von diesen Komponenten bedeutet dabei, dass die Polyamid-Formmasse keine wirksame Menge derartiger Verstärkungsmittel aufweist. Typischerweise können ansonsten die gewünschten Zielwerte für die Reißdehnung von wenigstens 5 %, bevorzugt von wenigstens 6 % und insbesondere bevorzugt von wenigstens 7 % nämlich nicht erreicht werden.
In einer weiteren bevorzugten Ausführungsform bestehen die Copolyamide der Komponente (A) aus Terephthalsäure (TPS), Isophthalsäure (IPS), 1,6-Hexandiamin (HMDA) und einem weiteren aliphatischen Diamin mit 9 bis 12 Kohlenstoffatomen (C9-C12-Diamin), wobei ein definierter Gehalt an C9-C12-Diamin und Isophthalsäure eingehalten wird. Diese Copolyamide zeichnen sich bevorzugtermassen durch einen Schmelzpunkt im Bereich von 300 bis 315°C, eine hohe Kristallinität, eine Glasübergangstemperatur bevorzugtermassen im Bereich von 110 bis 140°C aus.
Konkret betrifft die vorliegende Erfindung insbesondere eine Polyamid-Formmasse mit folgender Zusammensetzung:

(A) 62-87 Gew.-% eines teilaromatischen, teilkristallinen Copolyamids mit einem Schmelzpunkt von 270°C bis 320°C aufgebaut aus

100 Gew.-% Disäureanteil zusammengesetzt aus:
50 - 100 Gew.-% Terephthalsäure (TPS) und/oder Naphthalin-dicarbonsäure;
0 - 50 Gew.-% Isophthalsäure (IPS)

und 100 Gew.-% Diaminanteil mindestens eines Diamins ausgewählt aus der Gruppe bestehend aus:

Butandiamin, Pentandiamin, Hexandiamin, Octandiamin, Methylocatandiamin, Nonandiamin, Decandiamin, Undecandiamin und Dodecandiamin;

(B) 5-15 Gew.-% Ionomer;
(C) 8-18 Gew.-% Flammschutzmittel;
(D) 0-5 Gew.-% Additive;

wobei sich die Komponenten (A)-(D) auf 100 Gew.-% ergänzen.
Bevorzugtermassen ist dabei der Disäureteil der Komponente (A) zusammengesetzt aus 50 - 98.3 Gew.-%, bevorzugt 50 - 95 Gew.-% oder 72.0 - 98.3 Gew.-%, Terephthalsäure (TPS) (und/oder Naphthalin-dicarbonsäure) und 1.7 - 50 Gew.-%, respektive 5.0 - 50 Gew.-% oder 1.7 - 28 Gew.-%, Isophthalsäure (IPS), bei einer Gesamtsumme aller Disäuren

von 100 Gew.-%.

Weiterhin bevorzugtermassen ist dabei der Diaminanteil der Komponente (A) zusammengesetzt aus

10 - 80 Gew.-% wenigstens eines C4-C6 Diamins, bevorzugt mindestens eines solchen Diamins ausgewählt aus der Gruppe bestehend aus: 1,4-Butandiamin, 1,5-Pentandiamin, 1,6-Hexandiamin (HMDA); und

20 - 90 Gew.-% wenigstens eines weiteren Diamins, namentlich eines C9-C12 Diamins.

Eine weitere Ausführungsform zeichnet sich dadurch aus, dass der Diaminanteil der Komponente (A) zusammengesetzt ist aus 1,6-Hexandiamin, bevorzugt in einem Anteil von 51-80 Gew.-%; sowie einem oder mehreren C9-C12 Diaminen, bevorzugt in einem Anteil von 20-49 Gew.-%. In jeder dieser Ausführungsformen ergänzen sich die Diaminmengen zu 100 Gew.-%, dem gesamten Diaminanteil.

Gemäß einer bevorzugten Ausführungsform handelt es sich beim C9-C12 Diamin um ein Diamin ausgewählt aus der Gruppe: 1,9-Nonandiamin, Methyl-1,8-Octandiamin, 1,10-Decandiamin, 1,11-Undecandiamin, 1,12-Dodecandiamin, oder einer Mischung derartiger Diamine, wobei 1,10-Decandiamin und 1,12-Dodecandiamin bevorzugt sind, und besonders 1,10-Decandiamin allein bevorzugt ist.

Wie bereits erwähnt ist vorzugsweise die Komponente (A) ausgewählt ist aus der Gruppe 5T/5I, 6T/9T, 6T/10T, 6T/12T, 10T/6T, 10T/10I, 10T/10I/6T, 10T/6I, 6T/10T/6I, 6T/6I/10T/10I, 6T/10T/10I, 9T, 10T, 12T, wobei diese Systeme so gewählt sind, dass sie einen Schmelzpunkt im genannten Bereich aufweisen.

Bevorzugtermassen ist der Diaminanteil der Komponente (A) zusammengesetzt aus 55-75 Gew.-% 1,6-Hexandiamin (HMDA); und 25-45 Gew.-% C9-C12 Diamin.

Weiterhin bevorzugtermassen ist der Diaminanteil der Komponente (A) zusammengesetzt aus 55-70 Gew.-% 1,6-Hexandiamin (HMDA) und 30-45 Gew.-% C9-C12 Diamin.

Gemäß einer bevorzugten Ausführungsform der Erfindung stehen der Anteil an C9-C12-Diaminen und der Anteil an Isophthalsäure in einem bestimmten Verhältnis-Bereich zueinander. Konkret bedeutet dies, dass gemäß dieser bevorzugten Ausführungsform der Disäureanteil der Komponente (A) zusammengesetzt ist aus 72.0-98.3 Gew.-% Terephthalsäure (TPS) und/oder Naphthalindicarbonsäure und einem Isophthalsäure (IPS) Gehalt in einem Gew.-%-Bereich ermittelt als Funktion des Gehalts an C9-C12 Diamin in Prozenten des Diaminanteils. Der Gehalt an Isophthalsäure in Gewichtsprozent ermittelt sich dabei bevorzugtermassen nach der Formel:

$$\text{IPS (Gew.-\%)} = (39-0.7{*}\text{C9-C12 Diamin})$$

mit einer Bereichbreite von +/- 5 Gew.-%. Bevorzugtermassen dies generell mit der Maßgabe, dass der Gehalt an Isophthalsäure stets mindestens 1.7 Gew.-% beträgt.

Dies heißt, dass beispielsweise bei einem Gehalt von C9-C12-Diaminen von 20 Gew.-% der Gehalt an Isophthalsäure im Bereich von 20-30 Gew.-% liegt. Bei einem Gehalt von C9-C12-Diaminen von 35 Gew.-% liegt der Gehalt an Isophthalsäure im Bereich von 9.5-19.5 Gew.-%. Bei einem Gehalt von C9-C12-Diaminen von 49 Gew.% liegt der Gehalt an Isophthalsäure im Bereich von 1.7 -9.7 Gew.-%.

Gemäß einer weiteren bevorzugten Ausführungsform ist dabei die Bereichsbreite +/- 3 Gew.-%, insbesondere vorzugsweise +/- 2 Gew.-%.

Bevorzugt sind also beispielsweise für die Komponente (A) Polyamide mit einem C9-C12-Diamin-Gehalt von 20 bis 49 Gew.-% bezogen auf die Summe der Diamine und einem IPS-Gehalt von (39 - 0.7*C9-C12-Diamin) ± 5 Gew.-% bezogen auf die Summe der Disäuren, wobei der Gehalt an IPS stets mindestens 1.7 Gew.-% beträgt.

In weiteren besonderen Ausführungsformen werden folgende Zusammensetzungen für die Copolyamide (Polyamidmatrix) bevorzugt:

Copolyamide mit einem C9-C12-Diamin-Gehalt von 20 bis 49 Gew.-% bezogen auf die Summe der Diamine und einem IPS-Gehalt von (39 - 0.7*C9-C12-Diamin) ± 3 Gew.-% bezogen auf die Summe der Disäuren.

Copolyamide mit einem C9-C12-Diamin-Gehalt von 20 bis 49 Gew.-% bezogen auf die Summe der Diamine und einem IPS-Gehalt von (39 - 0.7*C9-C12-Diamin) ± 2 Gew.% bezogen auf die Summe der Disäuren.

Bevorzugt sind Polyamide mit einem C9-C12-Diamin-Gehalt von 25 bis 45 Gew.-% bezogen auf die Summe der Diamine und einem IPS-Gehalt von (39 - 0.7*C9-C12-Diamin) ± 5 Gew.-% bezogen auf die Summe der Disäuren.

Copolyamide mit einem C9-C12-Diamin-Gehalt von 25 bis 45 Gew.-% bezogen auf die Summe der Diamine und einem IPS-Gehalt von (39 - 0.7*C9-C12-Diamin) ± 3 Gew.-% bezogen auf die Summe der Disäuren.

Copolyamide mit einem C9-C12-Diamin-Gehalt von 25 bis 45 Gew.-% bezogen auf die Summe der Diamine und einem IPS-Gehalt von (39 - 0.7*C9-C12-Diamin) ± 2 Gew.-% bezogen auf die Summe der Disäuren.

Bevorzugt sind Polyamide mit einem C9-C12-Diamin-Gehalt von 30 bis 45 Gew.-% bezogen auf die Summe der Diamine und einem IPS-Gehalt von (39 - 0.7*C9-C12-Diamin) ± 5 Gew.-% bezogen auf die Summe der Disäuren.

Copolyamide mit einem C9-C12-Diamin-Gehalt von 30 bis 45 Gew.-% bezogen auf die Summe der Diamine und einem IPS-Gehalt von (39 - 0.7*C9-C12-Diamin) ± 3 Gew.-% bezogen auf die Summe der Disäuren.

Copolyamide mit einem C9-C12-Diamin-Gehalt von 30 bis 45 Gew.-% bezogen auf die Summe der Diamine und einem IPS-Gehalt von (39 - 0.7*C9-C12-Diamin) ± 2 Gew.-% bezogen auf die Summe der Disäuren.
Von den weiteren aliphatischen Diaminen (C9-C12-Diamin) werden 1,10-Decandiamin und 1,12-Dodecandiamin bevorzugt, und 1,10-Decandiamin besonders bevorzugt eingesetzt.
Das teilaromatische, teilkristalline Copolyamid (Komponente (A)) hat eine Lösungsviskosität $\eta_{rel}$, gemessen in m-Kresol (0,5 Gew.-%, 20°C), von höchstens 2.0, bevorzugt von höchstens 1,9, insbesondere von höchstens 1,8. Bevorzugt werden Copolyamide mit einer Lösungsviskosität $\eta_{rel}$ im Bereich von 1,45 bis 2.0, insbesondere im Bereich von 1.5 bis 1.9 oder 1.5 bis 1.8.
Die Copolyamide (Komponente A) haben bevorzugtermassen eine Glasübergangstemperatur im Bereich von 110 bis 140°C, bevorzugt im Bereich von 115 bis 135°C und insbesondere im Bereich von 120 bis 130°C.
Der Schmelzpunkt liegt vorzugsweise im Bereich von 270 bis 320°C, bevorzugt im Bereich von 280 bis 315°C und insbesondere im Bereich von 290 bis 310°C.
Die Schmelzenthalpie der Copolyamide liegt bevorzugtermassen im Bereich von 30 bis 60 J/g, bevorzug im Bereich von 35 bis 60 J/g und besonders bevorzugt im Bereich von 40 bis 60 J/g.
Weiterhin werden die Zusammensetzungen bevorzugtermassen so eingestellt, dass die Komponente (A) und/oder die ganze Polyamid-Formmasse eine Wasseraufnahme von weniger als 5 Gew.-%, bevorzugt weniger als 4 Gew.-%. aufweist, z.B. nach 336h in Wasser bei 95°C.

Wesentlicher Bestandteil der vorgeschlagenen Polyamid-Formmasse ist die Komponente (B). Deren Anteil liegt bevorzugtermassen im Bereich von 7-12 Gew.-%.
Die als Komponente (B) eingesetzten Ionomere besitzen kleine Mengen an ionischen Gruppen gebunden an eine unpolare Polymerkette. Zur Anwendung kommen erfindungsgemäss Ionomere, hergestellt aus den Monomeren α-Olefin, α,β-ungesättigte Carbonsäure und gegebenenfalls weiteren Comonomeren, wobei die Ionomere ganz oder teilweise durch Metallionen neutralisiert sind. Beispiele für das α-Olefin sind Ethen, Propen, Buten, Penten und Hexen, die allein oder in Kombination eingesetzt werden. Beispiele für die α,β-ungesättigte Carbonsäure sind Acrylsäure, Methacrylsäure, Ethacrylsäure, Itaconsäure, Maleinsäureanhydrid, Maleinsäuremonoethylester, und Maleinsäure. Die Carbonsäuren können allein oder in Kombination eingesetzt werden, Bevorzugt werden die Carbonsäuren Acrylsäure und Methacrylsäure. Beispiele für die erfindungsgemässen Comonomere sind Acrylsäureester, Methacrylsäureester, Styrol, Norbornen-Derivate, etc. Handelsprodukte sind z.B. AClyn (Honeywell) und Surlyn (DuPont).
Weiterhin bevorzugtermassen ist also generell das Ionomer der Komponente (B) hergestellt aus den Monomeren α-Olefin, α,β-ungesättigte Carbonsäure und gegebenenfalls weiteren Comonomeren, wobei das Ionomer ganz oder teilweise durch Metallionen neutralisiert ist.

Vorzugsweise ist dabei das α-Olefin ausgewählt ist aus der Gruppe: Ethen, Propen, Buten, Penten, Hexen, oder eine Kombination dieser α-Olefine.

Vorzugsweise ist auf der anderen Seite die α,β-ungesättigte Carbonsäure ausgewählt aus der Gruppe: Acrylsäure, Methacrylsäure, Ethacrylsäure, Itaconsäure, Maleinsäureanhydrid, Maleinsäure oder eine Kombination dieser Systeme, wobei insbesondere bevorzugt Acrylsäure und/oder Methacrylsäure eingesetzt sind.

Vorzugsweise sind zudem weiterhin die genannten Comonomere ausgewählt aus der Gruppe: Acrylsäureester, Methacrylsäureester, Styrol, Norbornen-Derivate.

Generell sind bei diesen Ionomeren vorzugsweise 3 bis 100, insbesondere 5 bis 90 Prozent der Carbonsäuregruppen des Ionomers mit Metallionen neutralisiert, wobei diese Metallionen bevorzugtennassen aus den Gruppen Ia, IIa, IIb, IIIa, IVa, VIb und VIII des Periodensystems der Elemente, insbesondere bevorzugtennassen aus der Gruppe Lithium, Natrium, Kalium, Zink, Zinn, Calcium, Barium und Magnesium, ausgewählt sind. Besonders bevorzugt wird Natrium und/oder Zink.

Die Ethylenionomeren der vorliegenden Erfindung können durch direkte oder Propf-Copolymerisation hergestellt werden. Das Verfahren der direkten Copolymerisation umfasst das Polymerisieren von α-Olefin, wie z.B. Ethylen, einer α,β-ungesättigten Carbonsäure und gegebenenfalls eines ungesättigten Comonomers in Gegenwart eines Radikal-Polymerisationsinitiators, gefolgt von der Neutralisation der Carbonsäuregruppen des entstandenen direkten Copolymers mit Metallionen.

Das Verfahren der Propf-Copolymerisation kann durch Polymerisieren von α-Olefin, wie z.B. Ethylen, und gegebenenfalls von Comonomeren in Gegenwart eines Radikal-Polymerisationsinitiators und Aufpfropfen der α,β-ungesättigten Carbonsäure auf das Ethylen/Comonomer-Polymerrückgrat, gefolgt von der Neutralisation der Carbonsäuregruppen des entstandenen Propfcopolymers mit Metallionen durchgeführt werden.

Weiterhin bevorzugtennassen ist das Ionomer der Komponente (B) ausgewählt aus einem Ionomer auf Basis der folgenden Gruppe von Systemen: Ethylen/Acrylsäure; Ethylen/Methacrylsäure; Ethylen/Maleinsäureanhyrid; Ethylen/Acrylsäure/n-Butylacrylat; Ethylen/Methacrylsäure/n-Butylacrylat; Ethylen/Methacrylsäure/2-Ethoxyethylacrylat; Ethylen/Methacrylsäure/n-Propylacrylat; Ethylen/Acrylsäure/2-Ethoxyethylacrylat; Ethylen/Acrylsäure/n-Octylacrylat; Ethylen/Methacrylsäure/n-Pentylacrylat; Ethylen/Acrylsäure/n-Pentylacrylat; Ethylen/Acrylsäure/2-Ethylhexylacrylat; Ethylen/Acrylsäure/n-Propylacrylat; Ethylen/Acrylsäure/n-Heptylacrylat; EthylenAcrylsäure/2-Methoxyethylacrylat;

Ethylen/Acrylsäure/3-Methoxypropylacrylat; Ethylen/Acrylsäure/3-Ethoxypropylacrylat respektive eine Kombination solcher Ionomere. Bevorzugtennassen ist das Ionomer dabei ganz spezifisch nur auf Basis von einer einzigen Säurekomponente aufgebaut.

Bevorzugte Ethylenionomere für die Verwendung in den Zusammensetzungen der vorliegenden Erfindung sind u.a. Ethylen/Acrylsäure; Ethylen/Methacrylsäure; Ethylen/Methacrylsäure/n-Butylacrylat; Ethylen/Acrylsäure/n-Butylacrylat; Ethylen/Acrylsäure/2-Methoxyethylacrylat; Ethylen/Acrylsäure/Ethylhexylacrylat.

Ganz besonders bevorzugtermassen ist das Ionomer der Komponente (B) ausgewählt aus einem Ionomer auf Basis der folgenden Gruppe von Systemen: Ethylen/(Meth)acrylsäure und/oder Ethylen/(Methacryl)säure/n-Butylacrylat.

Das Ionomer der Komponente (B) ist weiterhin bevorzugtermassen ein Ethylenionomer des Aufbaus E/X/Y, wobei E 45-94 Gew.-% Ethylen ist, X 1-20 Gew.-% einer ungesättigten Carbonsäure, wobei die ungesättigte Carbonsäure ausgewählt ist aus der Gruppe: Acrylsäure, Methacrylsäure, Maleinsäure, Fumarsäure, Itaconsäure und Halbestern der Malein-, Fumar- und Itaconsäure, und Y 5-35 Gew.-% mindestens eines weiteren ungesättigten Comonomers ist.

Bevorzugtennassen verfügt das Ionomer über einen Schmelzindex (MFI) im Bereich von 0.5 - 5.0 g/10 min, vorzugsweise im Bereich von 0.5 - 2.0 g/10 min, bestimmt nach ISO 1133 bei 190°C und einem Auflagegewicht von 2.16 kg. Die Ionomere weisen vorzugsweise einen Schmelzpunkt im Bereich von 60 bis 120°C, insbesondere bevorzugt im Bereich von 70 bis 100°C auf.

Die erfindungsgemässe Formmasse enthält weiterhin noch 8 - 18 Gew.-%, bevorzugt 9 - 18%, weiter bevorzugt 10 - 17 Gew.-% und insbesondere 12 - 16 Gew.-% eines Flammschutzmittels (als teilweiser Bestandteil der Komponente (C) oder diese Komponente (C) als ganzes bildend).

Das Flammschutzmittel in der Komponente (C) oder die Komponente (C) als ganzes bildend umfasst dabei bevorzugtennassen 60 - 100 Gew.-%, bevorzugt 70 - 100 Gew.-% bzw. 70 - 98 Gew.-%, insbesondere 80 - 100 Gew.-% bzw. 80 - 96 Gew.-% eines Phosphinsäuresalzes und/oder Diphosphinsäuresalzes (Komponente (C1)) sowie 0 - 40 Gew.-%, bevorzugt 0 - 30 Gew.-% bzw. 2 - 30 Gew.-%, insbesondere 0 - 20 Gew.-% bzw. 4 - 20 Gew.-% eines stickstoffhaltigen Synergisten und/oder eines Stickstoff und Phosphor enthaltenden Flammschutzmittels (Komponente (C2)).

In einer weiteren besonders bevorzugten Ausführung wird die Komponente (C) ohne zusätzlichen Synergisten (Komponente (C2)) gebildet.

Bei Komponente (C2) handelt es sich bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon.

Als Komponente (C2) wird insbesondere Melaminpolyphosphat bevorzugt. Derartige Flammschutzmittel sind aus dem Stand der Technik bekannt. Hierzu wird auf die DE 103 46 3261 verwiesen, diesbezüglich sei der Offenbarungsgehalt dieser Schrift ausdrücklich hierin eingeschlossen.

Bevorzugt wird als Komponente (C1) ein Phosphinsäuresalz der allgemeinen Formel I und/oder Formel (II) und/oder deren Polymere

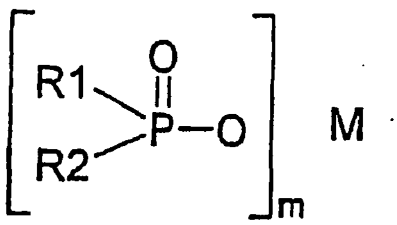

(I)

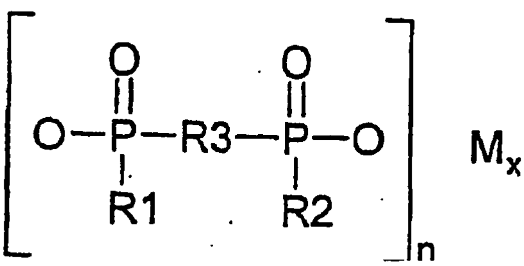

(II)

worin

R1, R2 gleich oder verschieden sind und bevorzugt C1-C8-Alkyl, linear oder verzweigt und/oder Aryl sind;

R3 C1-C10-Alkylen, linear oder verzweigt, C6-C10-Arylen, -Alkylarylen oder Arylalkylen sind;

M ein Metallion aus der 2. oder 3. Haupt- oder Nebengruppe des Periodensystems ist; und
m 2 oder 3;
n 1 oder 3;
x 1 oder 2
bedeuten.

Als Metallion M werden bevorzugt Al, Ca, Ba und Zn verwendet.

In Kombination mit den Flammschutzkomponenten (C1) und (C2) können gegebenenfalls zusätzlich 0.5 bis 5 Gew.-% an sauerstoff-, stickstoff- oder schwefelhaltigen Metallverbindungen als Stabilisatoren zur Reduktion von Korrosionsschäden (Komponente (C3)) zugegeben werden, wobei die Summe der Komponenten C1 bis C3 zusammen 100 Gew.-% ergeben. Dabei bevorzugte Metalle sind Aluminium, Calcium, Magnesium, Barium, Mangan und Zink. Geeignete Verbindungen sind ausgewählt aus der Gruppe der Oxide, Hydroxide, Carbonate, Silikate, Borate, Phosphate, Stannate, Salze von Fettsäuren sowie Kombinationen oder Mischungen dieser Verbindungen, wie z.B. Oxid-Hydroxide oder Oxid-Hydroxid-Carbonate. Beispiele sind Bariumoxid, Magnesiumoxid, Calciumoxid, Aluminiumoxid, Mangandioxid, Vanadiumoxid, Zinkoxid, Magnesiumhydroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Zinkcarbonat, Calciumcarbonat, Calciumphosphat, Magnesiumcarbonat, basisches Zinksilikat, Zinkstannat, Calciumstearat, Zinkstearat, Magnesiumstearat, Bariumstearat, Kaliumpalmitat, Magnesiumbehenat.

Bei den erfindungsgemässen Polyamid-Fonnassen bzw. bei den daraus hergestellten Formkörpern ist somit weiterhin hervorzuheben, dass in Kombination zu den vorstehend beschriebenen ausgezeichneten Eigenschaften auch ein herausragender Flammschutz erreicht wird. Die Formmasse ist nach UL-Klassifizierung V0 bei 1.6 mm dicken Probenkörper (UL-94, Prüfung nach den Normen der Underwriters Laboratories (U.L.), vgl. www.ulstandards.com).

Die erfindungsgemässen Copolyamide erreichend die Brandschutzklassierung "V0" auch ohne Synergist-Zusatz (C2). Daher setzt sich die Flammschutzausrüstung bevorzugt ausschliesslich aus den Komponenten C1 und C3 zusammen.

Gemäß einer bevorzugten Ausführungsform ist die Polyamid-Formmasse generell dadurch gekennzeichnet, dass der Anteil an Komponente (C) im Bereich von 10-18 Gew.-% liegt. Die Komponente (C) setzt sich wie oben dargelegt gemäss einer Ausführungsform zusammen aus einem Phosphinsäuresalze und/oder Diphosphinsäuresalze und einem stickstoffhaltigen Synergisten und/oder einem Stickstoff und/oder Phosphor enthaltenden Flammschutzmittel. Dabei sind Letztere vorzugsweise ausgewählt aus Melamin oder Kondensationsprodukten des Melamins, wie insbesondere Melem, Melam, Melon, oder Umsetzungsprodukte von Melamin mit Polyphosphorsäure oder Umsetzungsprodukte von Kondensationsprodukten des Melamins mit Polyphosphorsäure oder Gemische davon, insbesondere Melaminpolyphosphat.

Die erfindungsgemäßen Formmassen können aber auch weitere Zusatzstoffe (D), wie z.B. aus der Gruppe der anorganischen Stabilisatoren, organischen Stabilisatoren, Gleitmittel, Farbstoffe, Nukleierungsmittel, metallischen Pigmente, Metallflitter, metallbeschichtete Partikel, Antistatika, Leitfähigkeitsadditive, Entformungsmittel, optischen Aufheller, natürlichen Schichtsilikate, synthetischen Schichtsilikate oder Gemische der genannten Zusatzstoffe enthalten. Als Antistatika können in den erfindungsgemäßen Formmassen z.B. Ruß und/oder Kohlenstoffnanoröhrchen eingesetzt werden. Die Verwendung von Ruß kann aber auch der Verbesserung der Schwarzfärbung der Formmasse dienen.

Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z.B. Antioxidantien, Lichtschutzmittel, UV-Stabilisatoren, UV-Absorber oder UV-Blocker eingesetzt werden.

Generell ist gemäß einer weiteren bevorzugten Ausführungsform die Polyamid-Formmasse dadurch gekennzeichnet, dass als Additive der Komponente (D), vorzugsweise in einem Anteil im Bereich von 1-4 Gew.-%, Stabilisatoren, Verarbeitungshilfsmittel, anorganische Stabilisatoren, organische Stabilisatoren, Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, natürliche Schichtsilikate, synthetische Schichtsilikate oder Gemische der genannten Zusatzstoffe enthalten sind, wobei vorzugsweise als Antistatika Ruß und/oder Kohlenstoffnanoröhrchen eingesetzt werden. Vorzugsweise enthält die Polyamid-Formmasse keine Schlagzähmodifikatoren im Rahmen der Additive (D).

Eine weitere bevorzugte Ausführungsform ist dadurch gekennzeichnet, dass die Komponente (A) und/oder die Polyamid-Formmasse als ganzes einen Schmelzpunkt im Bereich von 280-315 °C, insbesondere bevorzugt im Bereich von 290-310 °C aufweist.

Die erfindungsgemässen Copolyamide können auf üblichen Polykondensationsanlagen über die Prozessfolge Vorkondensat und Nachkondensation hergestellt werden. Für die Polykondensation werden zur Regelung der Viskosität bevorzugt Kettenregler eingesetzt. Als Kettenregler eignen sich Monoamine oder Monosäuren wie Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylarnin, Stearylamin, Cyclohexylamin, 3-(Cyclohexylamino)propylamin, Methylcyclohexylamin, Dimethylcyclohexylamin, Benzylamin, 2-Phenylethylamin, u.a. Zusätzlich kann die Viskosität durch den Einsatz eines Diamin- oder Disäureüberschusses eingestellt werden.

Damit die Salzlösungen bei den Lösertemperaturen von 180 bis 230°C homogen und klar sind, werden zu den Monomeren üblicherweise 20 bis 30% Wasser zugesetzt. Zur Verhinderung übermässigen Schäumens beim Entspannen und Entgasen oder bei der Schmelzenachkondensation im Extruder wird den Ansätzen vorzugsweise ein Antischaummittel zugesetzt. Als Antischaummittel eignen sich wässrige Silikonemulsionen, Polydimethylsiloxan auf einem festen Träger, wie z.B. Zeolith, wasserfreies, hochmolekulares Polysiloxan oder Siloxane in organischen, wasserlöslichen Lösungsmitteln in einer Menge von 0.01 bis 0.5 Gewichts-%.

Als Polykondensationskatalysatoren werden den Monomermischungen vorzugsweise 0.005 bis 1.5 Gewichts-% Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ca, Zn oder Al und/oder deren Ester wie z.B. Triphenylphosphat, Triphenylphosphit oder Tris-(nonylphenyl)-phosphit zugesetzt. Bevorzugt sind hypophosphorige Säure und Natriumhydrogenhypophosphit Monohydrat in einer Menge von 100 bis 500 ppm Phosphor bezogen auf das Copolyamid.

Des weiteren betrifft die vorliegende Erfindung also auch Verfahren zur Herstellung von derartigen Polyamid-Formmassen. Sie betrifft aber zudem auch noch Formkörper hergestellt unter Verwendung von derartigen Polyamid-Formmassen. Es ist so, dass z.B. bei Konnektoren der kritischen Dicke und Metalleinlegern, die die Wärme nach innen führen, beim Löten Blasen entstehen können. Besonders kritisch sind dabei insbesondere offenbar häufig Dicken zwischen 1 und 2 mm, die schon bei vergleichsweise tieferen Temperaturen beginnen, Blasen zu bilden. Ohne dadurch an eine theoretische Erklärung gebunden oder durch eine solche eingeschränkt zu werden, kann dieser Effekt durch folgenden Mechanismus erklärt werden:

> Dünnere Wandstärken bilden weniger Blasen, weil sich hier keine kritische Wassermenge sammeln kann, die dazu fähig ist, eine Blase zu bilden, und weil das Wasser auf Grund der kurzen Diffusionswege beim Aufheizen gut verdunsten kann. Dickere Wandstärken sind ebenfalls weniger kritisch, weil sich dickere Prüfstäbe in der kurzen Heizzeit nicht vollständig erwärmen können. Vorzugsweise findet also das vorgeschlagene Material bei Formkörpern mit einer Wandstärke im Bereich von 0.5 - 3 mm, insbesondere von 1-2 mm Anwendung, wobei diese Wandstärke wenigstens in den beim Löten vom Wärmeübertrag betroffenen und zur Blasenbildung neigenden Bereichen vorliegt.

Des weiteren betrifft die vorliegende Erfindung also einen Formkörper, respektive Formteile, welche wenigstens teilweise aus derartigen Polyamid-Formmassen bestehen, hergestellt unter Verwendung einer Polyamid-Formmasse wie oben angegeben, insbesondere bevorzugt in Form oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Weitere Formteile sind Befestigungselemente elektrischer oder elektronischer Bauteile, Leiterplatten oder Bauteilgruppen, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen. Solche Formkörper oder generell die Polyamid-Formmasse ist dabei insbesondere dadurch gekennzeichnet, dass sie eine Reißdehnung von wenigstens 5 %, bevorzugt von wenigstens 6 % und insbesondere bevorzugt von wenigstens 7 % aufweisen.

Weitere Ausführungsformen sind in den abhängigen Ansprüchen angegeben.

## KURZE BESCHREIBUNG DER ZEICHNUNGEN

Bevorzugte Ausführungsformen der Erfindung werden im Folgenden u.a. anhand der Zeichnung beschrieben, die lediglich zur Erläuterung dient und nicht einschränkend auszulegen ist. Die Zeichnung zeigt in Fig. 1 die Oberflächentemperatur eines 1.6 mm dicken UL94 Brandstabs als Funktion der Zeit bei Bedingungen der Prüfung 2 (vgl. auch Tabelle 4).

## BESCHREIBUNG BEVORZUGTER AUSFÜHRUNGSFORMEN

Die Erfindung soll nachfolgend unter Verwendung von spezifischen Ausführungsbeispielen beschrieben und

mit den weniger leistungsfähigen Systemen nach dem Stand der Technik verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

Rohpolymere RP1 bis RP3:

Die Herstellung der Polyamide RP1 - RP3 erfolgt über ein Vorkondensat und anschliessende Nachkondensation. Die Rezepturkomponenten gemäss Tabelle 1 werden zusammen mit Katalysator, Regler und Wasser in einen 20 1-Autolclaven gegeben, innerhalb von 50 bis 80 Minuten auf eine Produkttemperatur von 260°C aufgeheizt, für eine Stunde auf einem Druck von 32 bar gehalten und anschliessend über eine Düse ausgetragen. Das Vorkondensat wird 24 Stunden bei 120°C und einem Vakuum von 30 mbar getrocknet.

Das so erhaltene Polyamid-Vorkondensat wird in einem Zweiwellenextruder der Firma Werner und Pfleiderer mit einem Schneckendurchmesser von 25 mm bei vorgegebenen Prozessparametern (Zylindertemperatur: 340°C, Schneckendrehzahl: 150 Upm, Durchsatz: 6 kg/h) nachkondensiert. Die Schmelze wird in Zone 10 durch einen Stickstoffstrom entgast. Das Produkt wird als Strang aus einer Düse mit 3 mm Durchmesser abgezogen und granuliert. Das Granulat wird 24 Stunden bei 100°C im Vakuum von 30 mbar getrocknet.

Die Polyamide werden mit einer Spritzgussmaschine Arburg Allrounder 320-210-750 zu ISO-Prüfkörper bei definierten Zylindertemperaturen der Zonen 1 bis 4 und einer definierten Werkzeugtemperatur verspritzt.

Die Rohpolymere RP1 - RP3 sind reine Copolyamide, wobei RP2 und RP3 erfundungsgemässe Beispiele der Komponente (A) sind und RP1 als Copolyamid-Komponente im Vergleichsversuch V5 eingesetzt wird. Die Rohpolymers RP1 - RP3 sind nicht compoundiert, das heißt ohne Flammschutzmittel, ohne Ionomer und im wesentlichen ohne Additive, in den Proportionen gemäß Tabelle 1. In dieser Form erfüllen die Copolyamide die Anforderungen an das Löten nach JEDEC SML1. Dies stellt jedoch keine ausreichende Lösung dar, da die Rohpolymere keinen ausreichenden Flammschutz nach UL 94 V0 bieten.

Die Beispiele B1-B3 und die Vergleichsbeispiele V1 bis V4 verwenden das Copolyamid aus Beispiel RP3, das Beispiel B4 verwendet das Rohpolymer RP2 und das Vergleichsbeispiel V5 verwendet das Copolyamid RP1 wie in Tabelle 2 angegeben, wobei nun aber die in der Tabelle 2 angegebenen Mengen Ionomer, Flammschutzmittel und Additive zugefügt sind.

Tabelle 1: Rohpolymere RP bis RP3, RP1 gemäss JP 2928325 und RP2 gemäss EP 1 988 113.

| | Einheit | RP1 | RP2 | RP3 |
|---|---|---|---|---|
| Zusammensetzung | | | | |
| 1.6-Hexandiamin | Gew.-Teile | 43.00 | 6.49 | 27.42 |
| 1,10-Decandiamin | Gew.-Teile | | 44.38 | 17.83 |
| Terephthalsäure | Gew.-Teile | 33.15 | 49.13 | 47.58 |
| Isophthalsäure | Gew.-Teile | | | 7.17 |
| Adipinsäure | Gew.-Teile | 23.85 | | |
| Spritzgussbedingungen | | | | |
| Zylindertemperatur Zone 1 | °C | 315 | 315 | 315 |
| Zylindertemperatur Zone 2 | °C | 320 | 320 | 320 |
| Zylindertemperatur Zone 3 | °C | 325 | 325 | 325 |
| Zylindertemperatur Zone 4 | °C | 330 | 330 | 330 |
| Werkzeugtemperatur | °C | 120 | 130 | 130 |
| Eigenschaften | | | | |
| Lösungsviskosität | | 1.67 | 1.62 | 1.66 |
| Schmelzpunkt | °C | 310 | 295 | 309 |

(fortgesetzt)

| Eigenschaften | | | | |
|---|---|---|---|---|
| Schmelzenthalpie | J/g | 60 | 50 | 47 |
| Glasübergangstemp. | °C | 94 | 115 | 129 |
| Wasseraufnahme | % | 6.2 | 2.8 | 3.6 |
| Lötbarkeit | % | 67 | 89 | 94 |
| JEDEC SML 1 | | ja | ja | ja |

Beispiel B1

Zur Herstellung des Beispiels B1 wird das Rohpolymer RP4 entsprechend Tabelle 2 in einem Zweiwellenextruder der Firma Werner und Pfleiderer mit einem Schneckendurchmesser von 25 mm bei vorgegebenen Prozessparametern (Zylindertemperatur: 320°C, Schneckendrehzahl: 250 Upm, Durchsatz: 10 kg/h) compoundiert. Dazu werden alle Komponenten nach Tabelle 2 mit Ausnahme des Flammschutzmittels Exolit OP 1230 vorgemischt und über eine Waage in den Einzug des Zweiwellenextruders dosiert. Über eine zweite Waage wird das Flammschutzmittel ebenfalls in den Einzug zudosiert. Die Schmelze wird gegebenenfalls in Zone 10 durch einen Stickstoffstrom leicht entgast. Das Produkt wird als Strang aus einer Düse mit 3 mn Durchumesser abgezogen und granuliert. Das Granulat wird 24 Stunden bei 100°C im Vakuum von 30 mbar getrocknet.

Beispiele B2 bis B4, sowie Vergleichsbeispiele V1 bis V5:

Die Beispiele B2 bis B4, sowie die Vergleichsbeispiele V1 bis V5 werden analog der Beschreibung der Herstellung des Beispiels B1 hergestellt.

Tabelle 2: Zusammensetzung und Eigenschaften der Compounds der Vergleichsbeispiele V1 - V5 und der Beispiele B1 bis B4 Spritzgussbedingungen für Vergleichsbeispiele V1 bis V5 und für die Beispiele B1 bis B4 wie bei RP3.

| | Einheit | V1 | V2 | V3 | V4 | B1 | B2 | B3 | B4 | V5 |
|---|---|---|---|---|---|---|---|---|---|---|
| Rohpolymer | - | RP3 | RP3 | RP3 | RP3 | RP3 | RP3 | RP3 | RP2 | RP1 |
| Polyamid | Gew.-% | 84.0 | 74.0 | 74.0 | 74.0 | 74.0 | 73.9 | 74.0 | 73.5 | 74.0 |
| Irganox 1098 | Gew.-% | 0.5 | 0.5 | 0.5 | 0.5 | 0.5 | 0.5 | 0.5 | 0.5 | 0.5 |
| Bariumstearat | Gew.-% | 0.4 | 0.4 | 0.4 | 0.4 | 0.4 | 0.4 | 0.4 | 0.4 | 0.4 |
| Mangandioxid | Gew.-% | 0.1 | 0.1 | 0.1 | 0.1 | 0.1 | 0.1 | 0.1 | 0.1 | 0.1 |
| Exolit OP1230 | Gew.-% | 15.0 | 15.0 | 15.0 | 15.0 | 15.0 | 15.0 | 15.0 | 15.0 | 15.0 |
| Surlyn 9320 | Gew.-% | | | | | 10.0 | 10.0 | 5.0 | 5.0 | 10.0 |
| Scona TSKD9103 GCT | Gew.-% | | 10.0 | | | | | | | |
| Scona TPPP2112 GA | Gew.-% | | | 10.0 | | | | | | |
| Lotader 4700 | Gew.-% | | | | 10.0 | | | | | |
| MPP | Gew.-% | | | | | | | | 0.5 | |

(fortgesetzt)

| | Einheit | V1 | V2 | V3 | V4 | B1 | B2 | B3 | B4 | V5 |
|---|---|---|---|---|---|---|---|---|---|---|
| Grivory G21 | Gew.-% | | | | | | | 5.0 | | |
| Mikrotalk IT extra | Gew.-% | | | | | | 0.1 | | | |
| Schmelzpunkt | °C | 308 | 307 | 308 | 308 | 307 | 307 | 305 | 295 | 310 |
| Schmelzenthalpie | J/g | 50 | 34 | 35 | 36 | 37 | 36 | 37 | 50 | 60 |
| Glasübergangstemp. | °C | 125 | 123 | 122 | 121 | 120 | 122 | 122 | 115 | 94 |
| Ablagerungen | - | nein | nein | nein | ja | nein | nein | nein | ja | ja |
| Lötbarkeit | % | 80 | 47 | 27 | 54 | 90 | 92 | 83 | 81 | 65 |
| JEDEC SML1 | - | ja | nein | nein | nein | ja | ja | ja | ja | nein |
| Zug-E-Modul | MPa | 4100 | 3200 | 3600 | 3300 | 2900 | 2900 | 3300 | 2600 | 3300 |
| Zugfestigkeit | MPa | 81 | 62 | 48 | 60 | 62 | 63 | 71 | 55 | 60 |
| Reissdehnung | % | 3.2 | 5.4 | 2.0 | 3.8 | 7.2 | 7.3 | 5.3 | 6.8 | 4.4 |
| Schlagzähigkeit | $kJ/m^2$ | 50 | 80 | 47 | 60 | 80 | 100 | 60 | 100 | 80 |
| Kerbschlagzähigkeit | $kJ/m^2$ | 4.3 | 6.2 | 5.1 | 4.5 | 6.0 | 6.5 | 5.8 | 5.1 | 5.4 |
| UL94 | - | V0 | V2 | HB | V2 | V0 | V0 | V0 | V0 | V0 |

| | |
|---|---|
| Exolit®OP1230: | Phosphororganisches Salz (Clariant Produkte GmbH), Flammschutzmittel. |
| Irganox 1098: | Sterisch gehindertes phenolisches Antioxidans (BASF SE) |
| Surlyn 9320: | Ethylen-Methacrylsäure-Acrylat-Terpolymer, teilweie neutralisiert mit Zinkionen (DuPont) |
| Scona TSKD9103 GCT: | Styrol-Ethylen-Butylen-Styrol-Blockcopolymer, gepfropft mit Maleinäsureanhydrid (kometra GmbH) |
| Scona TPPP2112 GA: | Polypropylen, gepfropft mit 1.2% Maleinsäureanhydrid (Kometra GmbH) |
| Lotader 4700: | Ethylen-Acrylsäureester-Maleinsäureanhydrid- Termpolymer (Arkema) |
| MPP: | Melaminpolyphosphat (DSM) |

V1 beschreibt eine Zusammensetzung aus im wesentlichen Rohpolymer und Flammschutzmittel ohne erfindungsgemässe Zugabe von ganz oder teilweise neutralisiertem Ionomer, die die Anforderungen an Lötbarkeit und Flammschutz erfüllt, ohne jedoch ausreichende Reissdehnung (mehr als 5% sind gefordert) zu besitzen.

V2 bis V4 stellen ungeeignete Lösungsversuche dar, die mechanischen Eigenschaften des Compounds zu verbessern: Die dem Fachmann geläufige Methode zur Verbesserung der Zähigkeit durch Zugabe eines Schlagzälunodifikators verbessert zwar die Reissdehnung merklich (V4) bis ausreichend (V2), jedoch werden Lötbarkeit und Flammschutz nicht mehr erreicht. Darüber hinaus zeigen sich bei Verwendung von Lotader Ablagerungen auf der Form und den Spritzgussteilen.

Erst die erfindungsgemässe Zugabe eines Ionomers löst die technische Aufgabe, die Zähigkeit ausgedrückt durch die Reissdehnung unter Erhalt der Flammschutzeigenschaft UL94 V0 zu erhöhen. Darüber hinaus wird überraschenderweise die Lötbarkeit im Allgemeinen sogar verbessert (B1 und B2), mindestens jedoch nicht verschlechtert (B3 und B4). Dabei können weitere dem Fachmann geläufige Additivierungen vorgenommen werden. So beschreibt B2 beispielsweise die Zugabe eines Nukleierungsmittels, B3 die Zugabe eines weiteren Flammschutzmittels als Synergist und B4 die Zugabe geringer Mengen eines weiteren Polyamids.

Die notwendige Auswahl eines geeigneten Rohpolymers wird demonstriert durch V5. Diese Zusammensetzung erfüllt zwar die Anforderungen an den Flammschutz, ist jedoch nicht zuverlässig lötbar unter JEDEC SML1-Bedingungen. Zudem wird die geforderte Reissdehnung von mindestens 5% nicht erreicht.

Die Messungen wurden nach folgenden Normen und an folgenden Prüfkörpern durchgeführt.

Thermisches Verhalten:

Schmelzpunkt, Schmelzenthalpie und Glasübergangstemperatur (Tg):

ISO-Norm 11357-11-2

Granulat

Die Differential Scanning Calorimetry (DSC) wurde mit Aufheizrate von 20 °C/min durchgeführt. Für die Glasumwandlungstemperatur (Tg) wird die Temperatur für den Onset angegeben.

Relative Viskosität:

DIN EN ISO 307, in 0,5 Gew.-%-iger m-Kresollösung, Temperatur 20°C,

Granulat

Zug-E-Modul, Zugfestigkeit und Reissfestigkeit:

ISO 527 mit einer Zuggeschwindigkeit von 50 mm/min (unverstärkte Varianten) oder einer Zuggeschwindigkeit von 5 mm/min (verstärkte Varianten)
ISO-Zugstab, Norm: ISO/CD 3167, Typ Al, 170 x 20/10 x 4 mm, Temperatur 23 °C

Schlagzähigkeit nach Charpy:

ISO 179/*eU
ISO-Prüfstab, Norm: ISO/CD 3167, Typ B1, 80 x 10 x 4 mm, Temperatur 23°C
* 1 = nicht instrumentiert, 2 = instrumentiert

Kerbschlagzähigkeit nach Charpy:

ISO 179/*eA
ISO-Prüfstab, Norm: ISO/CD 3167, Typ B1, 80 x 10 x 4 mm, Temperatur 23 °C
* 1 = nicht instrumentiert, 2 = instrumentiert

Wasseraufnahme:

Gewichtsänderung von Zugstäben gemäss ISO 527 in Wasser bei 95°C für eine Dauer von 336 Stunden

UL94:

Brandklasse gemäss UL94 an UL94-Normprüfkörpern mit 1.6mm Dicke.

Ablagerung:

Zur Beurteilung der Ablagerungen werden Platten der Dimension 100x100x3 mm, unter Bedingungen wie in Tabelle 1 für RP3 angegeben, spritzgegossen. Nach 30 Spritzgusszyklen wird die Form und das Formteil auf Ablagerungen hin untersucht. Werden deutliche Ablagerungen in der Form oder auf der Formteiloberfläche festgestellt, wird dies in Tabelle 2 in der Reihe "Ablagerungen" mit "ja" beim jeweiligen Versuch gekennzeichnet.

Lötbarkeit:

Es werden UL94 Brandstäbe der Dicken 0.8, 1.6 und 3.2 mm gespritzt. Diese Stäbe werden bei 85°C und 85% relativer Feuchte für 168 Stunden in einem Klimaschrank Allen 600 der Firma Angelantoni Industrie s.p.a. (IT) gelagert wie es in dem Joint Industry Standard IPC/JEDEC J-STD-020D.1 für den Feuchtigkeitssensitivitätslevel 1 (Moisture Sensitivity Level, SML 1) beschrieben ist. Danach werden jeweils 5 Prüfstäbe der drei verschiedenen Dicken auf eine Platine gelegt (einseitige Temperaturbelastung) und mit einer Bandgeschwindigkeit von 200 mm/min durch ein Reflow Lötsystem RO300FC der Firma Essemtec AG (CH) transportiert. Die Heizzonen werden auf die in der Tabelle 3 aufgeführten Temperaturen eingestellt. Die Prüfung 2 (einseitig) ergibt für einen 1.6 mm dicken UL94 Brandstab das vorgeschriebene Lötprofil mit einer Peaktemperatur von 260°C. Die Oberflächentemperatur eines 1.6 mm dicken UL94 Brandstabes ist 54 sec über 255°C und 22 sec über 260°C, wie Abbildung 1 zeigt. Anschliessend werden jeweils 5 Prüfstäbe der drei verschiedenen Dicken ohne Platine direkt auf das Drahtnetz gelegt und damit einer zweiseitigen Temperaturbelastung ausgesetzt. Zur Berechnung der Lötbarkeit wird die Anzahl der Prüfstäbe ohne Blister durch die gesamte Anzahl der geprüften Prüfstäbe (= 90) geteilt und mit 100% multipliziert.

Tabelle 3: Temperatureinstellungen der Heizzonen der Reflow Lötsystems.

| | Zone 1 [°C] | Zone 2 [°C] | Zone 3 [°C] |
|---|---|---|---|
| Prüfung 1 (einseitig) | 155 | 235 | 280 |
| Prüfung 2 (einseitig) | 155 | 235 | 285 |
| Prüfung 3 (einseitig) | 155 | 235 | 295 |
| Prüfung 4 (zweiseitig) | 140 | 230 | 265 |
| Prüfung 5 (zweiseitig) | 140 | 230 | 275 |
| Prüfung 6 (zweiseitig) | 140 | 230 | 285 |

<u>JEDEC SML 1:</u>

1.6 mm dicke UL94 Brandstäbe erreichen das Feuchtigkeitssensitivitätslevel 1 (Moisture Sensitivity Level, SML 1). Das heisst nach der Konditionierung bei 85°C und 85% relativer Feuchte für 168 Stunden sind keine Blasen erkennbar bei den Bedingungen der Prüfung 2 (einseitig) gemäss Tabelle 3 und dem Temperaturprofil gemäss Fig 1.

**Patentansprüche**

**1.** Polyamid-Formmasse mit folgender Zusammensetzung:

(A) 62-87 Gew.-% eines teilaromatischen, teilkristallinen Copolyamids mit einem Schmelzpunkt von 270°C bis 320°C aufgebaut aus 100 Gew.-% Disäureanteil zusammengesetzt aus:

50 - 100 Gew.-% Terephthalsäure (TPS) und/oder Naphthalin-dicarbonsäure;
0 - 50 Gew.-% Isophthalsäure (IPS)

und 100 Gew.-% Diaminanteil zusammengesetzt aus mindestens einem Diamin ausgewählt aus der Gruppe bestehend aus:

Butandiamin, Pentandiamin, Hexandiamin, Octandiamin, Methyloctandiamin, Nonandiamin, Decandiamin, Undecandiamin und Dodecandiamin;

(B) 5-15 Gew.-% Ionomer;
(C) 8-18 Gew.-% Flammschutzmittel;
(D) 0-5 Gew.-% Additive;

wobei sich die Komponenten (A)-(D) auf 100 Gew.-% ergänzen.

**2.** Polyamid-Formmasse nach Anspruch 1, **dadurch gekennzeichnet, dass** 100 Gew.-% Diaminanteil der Komponente (A) zusammengesetzt ist aus

10 - 80 Gew.-% C4-C6 Diamin, bevorzugt mindestens eines solchen Diamins ausgewählt aus der Gruppe bestehend aus: 1,4-Butandiamin, 1,5-Pentandiamin, 1,6-Hexandiamin (HMDA);
20 - 90 Gew.-% C9-C12 Diamin

wobei insbesondere bevorzugtermassen 100 Gew.-% Diaminanteil der Komponente (A) zusammengesetzt ist aus

1,6-Hexandiamin, bevorzugt in einem Anteil von 51-80 Gew.-%;
C9-C12 Diamin, bevorzugt in einem Anteil von 20-49 Gew.-%.

**3.** Polyamid-Formmasse nach Anspruch 1 oder 2, **dadurch gekennzeichnet, dass** der Disäureteil der Komponente (A) zusammengesetzt ist aus

50 - 98.3 Gew.-%, bevorzugt 72.0-98.3 Gew.-%, Terephthalsäure (TPS);
1.7 - 50 Gew.-%, bevorzugt 1.7 - 28 Gew.-%, Isophthalsäure (IPS).

**4.** Polyamid-Formmasse nach Anspruch 1, **dadurch gekennzeichnet, dass** die Komponente (A) ausgewählt ist aus der Gruppe 5T/5I, 6T/9T, 6T/10T, 6T/12T, 10T/6T, 10T/10I, 10T/10I/6T, 10T/6I, 6T/10T/6I, 6T/6I/10T/10I, 6T/10T/10I, 9T, 10T, 12T.

**5.** Polyamid-Formmasse nach einem der vorhergehenden Ansprüche, **dadurch gekennzeichnet, dass** der Anteil an Komponente (B) im Bereich von 7-12 Gew.-% liegt.

**6.** Polyamid-Formmasse nach einem der vorhergehenden Ansprüche, **dadurch gekennzeichnet, dass** das Ionomer der Komponente (B) hergestellt ist aus den Monomeren α-Olefin, α,β-ungesättigte Carbonsäure und gegebenenfalls weiteren Comonomeren, wobei das Ionomer ganz oder teilweise durch Metallionen neutralisiert sind, wobei vorzugsweise das α-Olefin ausgewählt ist aus der Gruppe: Ethen, Propen, Buten, Penten, Hexen, oder eine Kombination dieser α-Olefine, und/oder wobei vorzugsweise die α,β-ungesättigte Carbonsäure ausgewählt ist aus der Gruppe: Acrylsäure, Methacrylsäure, Ethacrylsäure, Itaconsäure, Maleinsäureanhydrid, Maleinsäure oder eine Kombination dieser Systeme, wobei insbesondere bevorzugt Acrylsäure und/oder Methacrylsäure eingesetzt sind, und/oder wobei weiterhin vorzugsweise die genannten Comonomere ausgewählt sind aus der Gruppe: Acrylsäureester, Methacrylsäureester, Styrol, Norbornen-Derivate, wobei weiterhin vorzugsweise 3 bis 100, insbesondere 5 bis 90 Prozent der Carbonsäuregruppen des Ionomers mit Metallionen, die aus den Gruppen Ia, IIa, IIb, IIIa, IVa, VIb und VIII des Periodensystems der Elemente, insbesondere bevorzugtermassen aus der Gruppe Lithium, Natrium, Kalium, Zink, Zinn, Calcium, Barium und Magnesium, ausgewählt sind, neutralisiert sind.

**7.** Polyamid-Formmasse nach einem der vorhergehenden Ansprüche, **dadurch gekennzeichnet, dass** das Ionomer der Komponente (B) ausgewählt ist aus einem Ionomer auf Basis der folgenden Gruppe von Systemen: Ethylen/Acrylsäure; Ethylen/Methacrylsäure; Ethylen/Maleinsäureanhyrid; Ethylen/Acrylsäure/n-Butylacrylat; Ethylen/Methacrylsäure/n-Butylacrylat; Ethylen/Methacrylsäure/2-Ethoxyethylacrylat; Ethylen/Methacrylsäure/n-Propylacrylat; Ethylen/Acrylsäure/2-Ethoxyethylacrylat; Ethylen/Acrylsäure/n-Octylacrylat; Ethylen/Methacrylsäure/n-Pentylacrylat; Ethylen/Acrylsäure/n-Pentylacrylat; Ethylen/Acrylsäure/2-Ethylhexylacrylat; Ethylen/Acrylsäure/n-Propylacrylat; Ethylen/Acrylsäure/n-Heptylacrylat; Ethylen/Acrylsäure/2-Methoxyethylacrylat; Ethylen/Acrylsäure/3-Methoxypropylacrylat; Ethylen/Acrylsäure/3-Ethoxypropylacrylat respektive eine Kombination solcher Ionomere.

**8.** Polyamid-Formmasse nach einem der vorhergehenden Ansprüche, **dadurch gekennzeichnet, dass** das Ionomer der Komponente (B) ausgewählt ist aus einem Ionomer auf Basis der folgenden Gruppe von Systemen: Ethylen/(Meth)acrylsäure und/oder Ethylen/(Methacryl)säure/n-Butylacrylat.

**9.** Polyamid-Formmasse nach einem der vorhergehenden Ansprüche, **dadurch gekennzeichnet, dass** das Ionomer der Komponente (B) ein Ethylenionomer des Aufbaus E/X/Y ist, wobei E 45-94 Gew.-% Ethylen ist, X 1-20 Gew.-% einer ungesättigten Carbonsäure, wobei die ungesättigte Carbonsäure ausgewählt ist aus der Gruppe: Acrylsäure, Methacrylsäure, Maleinsäure, Fumarsäure, Itaconsäure und Halbestern der Malein-, Fumar- und Itaconsäure, und Y 5-35 Gew.-% mindestens eines weiteren ungesättigten Comonomers ist.

**10.** Polyamid-Formmasse nach einem der vorhergehenden Ansprüche, **dadurch gekennzeichnet, dass** der Anteil an Komponente (C) im Bereich von 10-17 Gew.-% liegt, wobei sich bevorzugtermassen die Komponente (C) zusammensetzt aus 60-100 Gew.-%, vorzugsweise 70-100 Gew.-%, insbesondere vorzugsweise 80-100 Gew.-% eines Phosphinsäuresalzes und/oder Diphosphinsäuresalzes und 0-40 Gew.-%, respektive 0-30 Gew.-%, respektive 0-20 Gew.-% eines stickstoffhaltigen Synergisten und/oder eines Stickstoff und/oder Phosphor enthaltenden Flammschutzmittels, wobei Letztere vorzugsweise ausgewählt sind aus Melamin oder Kondensationsprodukten des Melamins, wie insbesondere Melem, Melam, Melon, oder Umsetzungsprodukte von Melamin mit Polyphosphorsäure oder Umsetzungsprodukte von Kondensationsprodukten des Melamins mit Polyphosphorsäure oder Gemische davon, insbesondere Melaminpolyphosphat.

**11.** Polyamid-Formmasse nach einem der vorhergehenden Ansprüche, **dadurch gekennzeichnet, dass** als Additive der Komponente (D) Stabilisatoren, Verarbeitungshilfsmittel, anorganische Stabilisatoren, organische Stabilisatoren, Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, natürliche Schichtsilikate, synthetische Schichtsilikate oder Gemische der genannten Zusatzstoffe enthalten sind, wobei vorzugsweise als Antistatika Ruß und/oder Kohlenstoffnanoröhrchen eingesetzt werden.

**12.** Polyamid-Formmasse nach einem der vorhergehenden Ansprüche, **dadurch gekennzeichnet, dass** das Ionomer einen Schmelzindex (MFI) im Bereich von 0.5 - 5.0 g/10 min, vorzugsweise im Bereich von 0.5 - 2.0 g/10 min aufweist.

**13.** Polyamid-Formmasse nach einem der vorhergehenden Ansprüche, **dadurch gekennzeichnet, dass** die Komponente (A) und/oder die Polyamid-Formmasse als ganzes einen Schmelzpunkt im Bereich von 280-315 °C, insbesondere bevorzugt im Bereich von 290-310 °C aufweist.

**14.** Formkörper hergestellt unter Verwendung einer Polyamid-Formmasse nach einem der vorhergehenden Ansprüche, insbesondere bevorzugt in Form oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines integrierten Schaltkreises (IC), eines Prozessors, eines Controllers, eines Reglers, eines Speichers, eines Sensors, eines Befestigungselementes für elektrische oder elektronische Bauteile, Leiterplatten oder Bauteilgruppen, wie z.B. Abstandshalter, Bolzen, Leisten, Einschubführungen, Schrauben und/oder Muttern, eines Sockels, eines Steckverbinders, eines Steckers oder einer Buchse. eines Filmscharniers, eines Schnapphakens (Snap-in) und/oder einer Federzunge.

**15.** Formkörper nach Anspruch 14, **dadurch gekennzeichnet, dass** er eine Reißdehnung von wenigstens 5 %, bevorzugt von wenigstens 6 % und insbesondere bevorzugt von 7 % aufweist

## Claims

**1.** Polyamide moulding composition having the following composition:

(A) 62-87% by weight of a partially aromatic, partially crystalline copolyamide having a melting point of 270°C to 320°C and made up of 100% by weight of diacid fraction composed of:

50-100% by weight of terephthalic acid (TPA) and/or naphthalenedicarboxylic acid;
0-50% by weight of isophthalic acid (IPA)

and 100% by weight of diamine fraction composed of at least one diamine selected from the group consisting of:

butanediamine, pentanediamine, hexanediamine, octanediamine, methyloctanediamine, nonanediamine, decanediamine, undecane-diamine and dodecanediamine;

(B) 5-15% by weight of ionomer;
(C) 8-18% by weight of flame retardants;
(D) 0-5% by weight of additives;

where the components (A)-(D) add up to 100% by weight.

**2.** Polyamide moulding composition according to Claim 1, **characterized in that** 100% by weight of diamine fraction of the component (A) is composed of

10-80% by weight of C4-C6 diamine, preferably at least one such diamine selected from the group consisting of: 1,4-butanediamine, 1,5-pentanediamine, 1,6-hexanediamine (HMDA);
20-90% by weight of C9-C12 diamine,

where 100% by weight of diamine fraction of the component (A) is particularly preferably composed of

1,6-hexanediamine, preferably in a proportion of 51-80% by weight;
C9-C12-iamine, preferably in a proportion of 20-49% by weight.

3. Polyamide moulding composition according to Claim 1 or 2, **characterized in that** the diacid fraction of the component (A) is composed of

50-98.3% by weight, preferably 72.0-98.3% by weight, of terephthalic acid (TPA);
1.7-50% by weight, preferably 1.7-28% by weight, of isophthalic acid (IPA).

4. Polyamide moulding composition according to claim 1, **characterized in that** the component (A) is selected from the group consisting of 5T/5I, 6T/6I/66, 6T/9T, 6T/10T, 6T/12T, 10T/6T, 10T/10I, 10T/10I/6T, 10T/6I, 6T/10T/6I, 6T/6I/10T/10I, 6T/10T/10I, 9T, 10T, 12T.

5. Polyamide moulding composition according to any of the preceding claims, **characterized in that** the proportion of component (B) is in the range 7-12% by weight.

6. Polyamide moulding composition according to any of the preceding claims, **characterized in that** the ionomer of the component (B) has been prepared from the monomers α-olefin, α,β-unsaturated carboxylic acid and optionally further comonomers, where the ionomer is completely or partially neutralized by metal ions, the α-olefin is preferably selected from the group consisting of: ethene, propene, butene, pentene, hexene, or a combination of these α-olefins, and/or the α,β-unsaturated carboxylic acid is preferably selected from the group consisting of: acrylic acid, methacrylic acid, ethacrylic acid, itaconic acid, maleic anhydride, maleic acid or a combination of these systems, with particular preference being given to using acrylic acid and/or methacrylic acid and/or further preference being given to the comonomers mentioned being selected from the group consisting of: acrylic esters, methacrylic esters, styrene, norbornene derivatives, with more preferably from 3 to 100 per cent, in particular from 5 to 90 per cent, of the carboxylic acid groups of the ionomer being neutralized with metal ions selected from groups Ia, IIa, IIb, IIIa, IVa, VIb and VIII of the Periodic Table of the Elements, particularly preferably from the group consisting of lithium, sodium, potassium, zinc, tin, calcium, barium and magnesium.

7. Polyamide moulding composition according to any of the preceding claims, **characterized in that** the ionomer of the component (B) is selected from among ionomers based on the following groups of systems: ethylene-acrylic acid; ethylene-methacrylic acid; ethylene-maleic anhydride; ethylene-acrylic acid-n-butyl acrylate; ethylene-methacrylic acid-n-butyl acrylate; ethylene-methacrylic acid-2-ethoxyethyl acrylate; ethylene-methacrylic acid-n-propyl acrylate; ethylene-acrylic acid-2-ethoxyethyl acrylate; ethylene-acrylic acid-n-octyl acrylate; ethylene-methacrylic acid-n-pentyl acrylate; ethylene-acrylic acid-n-pentyl acrylate; ethylene-acrylic acid-2-ethylhexyl acrylate; ethylene-acrylic acid-n-propyl acrylate; ethylene-acrylic acid-n-heptyl acrylate; ethylene-acrylic acid-2-methoxyethyl acrylate; ethylene-acrylic acid-3-methoxypropyl acrylate; ethylene-acrylic acid-3-ethoxypropyl acrylate or a combination of such ionomers.

8. Polyamide moulding composition according to any of the preceding claims, **characterized in that** the ionomer of the component (B) is selected from among ionomers based on the following group of systems: ethylene-(meth)acrylic acid and ethylene-(meth)acrylic acid-n-butyl acrylate.

9. Polyamide moulding composition according to any of the preceding claims, **characterized in that** the ionomer of the component (B) is an ethylene ionomer having the composition E/X/Y, where E is 45-94% by weight of ethylene, X is 1-20% by weight of an unsaturated carboxylic acid selected from the group consisting of: acrylic acid, methacrylic acid, maleic acid, fumaric acid, itaconic acid and monoesters of maleic, fumaric and itaconic acids and Y is 5-35% by weight of at least one further unsaturated comonomer.

10. Polyamide moulding composition according to any of the preceding claims, **characterized in that** the proportion of component (C) is in the range 10-17% by weight, with the component (C) preferably being composed of 60-100% by weight, preferably 70-100% by weight, particularly preferably 80-100% by weight, of a phosphinic acid salt and/or diphosphinic acid salt and 0-40% by weight, or 0-30% by weight, or 0-20% by weight, of a nitrogen-containing synergist and/or a nitrogen- and/or phosphorus-containing flame retardant, with the latter preferably being selected from among melamine or condensation products of melamine, in particular melem, melam, melon, or reaction products of melamine with polyphosphoric acid or reaction products of condensation products of melamine with polyphosphoric acid or mixtures thereof, in particular melamine polyphosphate.

**11.** Polyamide moulding composition according to any of the preceding claims, **characterized in that** stabilizers, processing aids, inorganic stabilizers, organic stabilizers, lubricants, dyes, nucleating agents, metallic pigments, metal flakes, metal-coated particles, antistatics, conductivity additives, mould release agents, optical brighteners, natural sheet silicates, synthetic sheet silicates or mixtures of the additives mentioned are present as additives of the component (D), with preference being given to using carbon black and/or carbon nanotubes as antistatics.

**12.** Polyamide moulding composition according to any of the preceding claims, **characterized in that** the ionomer has a melt flow index (MFI) in the range 0.5-5.0 g/10 min, preferably in the range 0.5-2.0 g/10 min.

**13.** Polyamide moulding composition according to any of the preceding claims, **characterized in that** the component (A) and/or the polyamide moulding composition as a whole has a melting point in the range 280-315°C, particularly preferably in the range 290-310°C.

**14.** Moulding produced using a polyamide moulding composition according to any of the preceding claims, particularly preferably in the form of or as part of an electric or electronic passive or active component, a printed circuit board, part of a printed circuit board, a housing constituent, a film, a line, in particular in the form of or as part of a switch, a plug, a bushing, a distributor, a relay, a resistance, a condenser, a coil or a coil core, a lamp, a diode, an LED, a transistor, a connector, an integrated circuit (IC), a processor, a controller, a regulator, a memory, a sensor, a fastening element for electric or electronic components, printed circuit boards or component groups such as spacers, pins, strips, plug-in guides, screws and/or nuts, a base, a plug connector, a plug or a bushing, a film hinge, a snap-in hook and/or a spring tongue.

**15.** Moulding according to Claim 14, **characterized in that** said moulding has an elongation at break of at least 5%, preferably at least 6% and particularly preferably at least 7%.

**Revendications**

**1.** Matière moulable à base de polyamides, ayant la composition suivante :

(A) 62 à 87 % en poids d'un copolyamide partiellement aromatique, partiellement cristallin ayant un point de fusion compris entre 270 °C et 320 °C, constitué de
une partie de diacides à 100 % en poids, composée de :

50 à 100 % en poids d'acide téréphtalique (TPS) et/ou d'acide dicarboxylique naphtalénique ;
0 à 50 % en poids d'acide isophtalique (IPS)

et une partie de diamines à 100 % en poids, composée d'au moins une diamine choisie dans le groupe constitué de :

butanediamine, pentanediamine, hexanediamine, octanediamine, méthyloctanediamine, nonanediamine, undécanediamine et dodécanediamine ;

(B) 5 à 15 % en poids d'ionomère ;
(C) 8 à 18 % en poids d'agent ignifuge ;
(D) 0 à 5 % en poids d'additifs ;

la somme les composants (A) à (D) étant égale à 100 % en poids.

**2.** Matière moulable à base de polyamides selon la revendication 1, **caractérisée en ce que** la partie de diamines à 100 % en poids du composant (A) est composée de

10 à 80 % en poids de diamines en C4 à C6, de préférence d'au moins une de ces diamines choisie dans le groupe constitué de : butanediamine-1,4, pentanediamine-1,5, hexanediamine-1,6 (HMDA) ; 20 à 90 % en poids des diamines en C9 à C12,

la partie de diamines à 100 % en poids du composant (A) étant de préférence notamment composée de

hexanediamine-1,6, de préférence dans une proportion de 51 à 81 % en poids ; diamine en C9 à C12, de préférence dans une proportion de 20 à 49 % en poids.

3. Matière moulable à base de polyamides selon les revendications 1 ou 2, **caractérisée en ce que** la partie diacides du composant (A) est composée de

   50 à 98,3 % en poids, de préférence 72,0 à 98,3 % en poids, d'acide téréphtalique (TPS) ;
   1,7 à 50 % en poids, de préférence 1,7 à 28 % en poids, d'acide isophtalique (IPS).

4. Matière moulable à base de polyamides selon la revendication 1, **caractérisée en ce que** le composant (A) est choisi dans le groupe 5T/5I, 6T/9T, 6T/10T, 6T/12T, 10T/6T, 10T/10I, 10T/10I/6T, 10T/6I, 6T/10T/6I, 6T/6I/10T/10I, 6T/10T/10I, 9T, 10T, 12T.

5. Matière moulable à base de polyamides selon l'une des revendications précédentes, **caractérisée en ce que** la proportion du composant (B) est comprise entre 7 et 12 % en poids.

6. Matière moulable à base de polyamides selon l'une des revendications précédentes, **caractérisée en ce que** ledit ionomère du composant (B) est préparé à partir des monomères $\alpha$-oléfine, acide carboxylique $\alpha$, $\beta$-insaturé et, le cas échéant, d'autres comonomères, ledit ionomère étant en totalité ou en partie neutralisé par des ions métalliques, ladite $\alpha$-oléfine étant de préférence choisie dans le groupe : éthène, propène, butène, pentène, hexène ou une combinaison de ces $\alpha$-oléfines, et/ou l'acide carboxylique $\alpha,\beta$-insaturé étant de préférence choisi dans le groupe : acide acrylique, acide méthacrylique, acide éthacrylique, acide itaconique, anhydride maléique, acide maléique ou une combinaison de ces systèmes, la mise en oeuvre d'acide acrylique et/ou d'acide méthacrylique étant particulièrement préférée, et/ou lesdits comonomères étant de préférence choisis dans le groupe : esters de l'acide acrylique, esters de l'acide méthacrylique, styrène, dérivés de norbornène, préférentiellement 3 à 100, notamment 5 à 90 % des groupes d'acide carboxylique dudit ionomère étant en outre neutralisés avec des ions métalliques choisis dans les groupes Ia, IIa, IIb, IIIa, IVa, VIb et VIII du tableau périodique des éléments, avec une préférence particulière dans le groupe lithium, sodium, potassium, zinc, étain, calcium, baryum et magnésium.

7. Matière moulable à base de polyamides selon l'une des revendications précédentes, **caractérisée en ce que** ledit ionomère du composant (B) est choisi parmi un ionomère à base du groupe suivant de systèmes : éthylène / acide acrylique ; éthylène / acide méthacrylique ; éthylène / anhydride maléique ; éthylène / acide acrylique / acrylate de n-butyle ; éthylène / acide méthacrylique / acrylate de n-butyle ; éthylène / acide méthacrylique / acrylate de 2-éthoxyéthyle ; éthylène / acide méthacrylique /acrylate de n-propyle ; éthylène / acide acrylique /acrylate de 2-éthoxyéthyle ; éthylène / acide acrylique / acrylate de n-octyle ; éthylène / acide méthacrylique / acrylate n-pentyle ; éthylène / acide acrylique / acrylate de n-pentyle ; éthylène / acide acrylique / acrylate de 2-éthocxyéthyle ; éthylène /acide acrylique / acrylate de n-propyle ; éthylène /acide acrylique / acrylate de n-heptyle ; éthylène /acide acrylique / acrylate de 2-méthoxyethyle ; éthylène / acide acrylique / acrylate 3-méthoxypropyle ; éthylène / acide acrylique / acrylate de 3-éthoxypropyle ou bien parmi une combinaison de tels ionomères.

8. Matière moulable à base de polyamides selon l'une des revendications précédentes, **caractérisée en ce que** ledit ionomère du composant (B) est choisi parmi un ionomère à base du groupe suivant de systèmes : éthylène / acide (méth)acrylique et/ou éthylène /acide (meth)acrylique / acrylate de n-butyle.

9. Matière moulable à base de polyamides selon l'une des revendications précédentes, **caractérisée en ce que** le ionomère du composant (B) est un ionomère d'éthylène d'une structure E/X/Y dans laquelle E est 45 à 94 % en poids d'éthylène, X est 1 à 20 % en poids d'un acide carboxylique insaturé, ledit acide carboxylique insaturé est choisi dans le groupe : acide acrylique, acide méthacrylique, acide maléique, acide fumarique, acide itaconique et des demi-esters de l'acide maléique, fumarique et itaconique, et Y est 5 à 35 % en poids d'au moins un autre comonomère insaturé.

10. Matière moulable à base de polyamides selon l'une des revendications précédentes, **caractérisée en ce que** la proportion du composant (C) est comprise entre 10 et 17 % en poids, le composant C étant préférentiellement composée de 60 à 100 % en poids, de préférence de 70 à 100 % en poids, de manière particulièrement préférée de 80 à 100 % en poids d'un sel d'acide hypophosphoreux et/ou d'un sel de diacide hypophosphoreux et, respectivement, de 0 à 40 % en poids, de 0 à 30 % en poids, de 0 à 20 % en poids d'un produit synergique contenant de l'azote et/ou d'un agent ignifuge contenant de l'azote et/ou du phosphore, ce dernier étant de préférence choisi parmi la mélamine ou les produits de condensation de la mélamine, s'agissant notamment de mélème, mélame,

mélone, ou les produits de réaction de la mélamine avec l'acide polyphosphorique ou les produit de réaction de produits de condensation de la mélamine avec l'acide polyphosphorique ou leurs mélange, s'agissant notamment du polyphosphate de mélamine.

**11.** Matière moulable à base de polyamides selon l'une des revendications précédentes, **caractérisée en ce qu'**elle contient, en tant qu'additifs du composant (D), des agents stabilisants, des agents auxiliaires de transformation, des agents stabilisants inorganiques, des agents stabilisants organiques, des agents lubrifiants, des colorants, des agents de nucléation, des pigments métalliques, des paillettes métalliques, des particules pourvues d'un revêtement métallique, des agents antistatiques, des additifs de conductivité, des agents de démoulage, des azurants optiques, des phyllosilicates naturels, des phyllosilicates synthétiques ou des mélanges desdites additifs, les agents antistatiques mis en oeuvre étant de préférence du noir de carbone et/ou des nanotubes de carbone.

**12.** Matière moulable à base de polyamides selon l'une des revendications précédentes, **caractérisée en ce que** ledit ionomère présente un indice de fluidité (MFI) compris entre 0,5 et 5,0 g / 10 min, de préférence compris entre 0,5 et 2,0 g / 10 min.

**13.** Matière moulable à base de polyamides selon l'une des revendications précédentes, **caractérisée en ce que** le composant (A) et/ou la matière moulable à base de polyamides en tant que tel présente un point de fusion compris entre 280 et 315°C, d'une manière particulièrement préférée compris entre 290 et 310 °C.

**14.** Corps moulé, fabriqué en mettant en oeuvre une matière moulable à base de polyamides selon l'une des revendications précédentes, de manière particulièrement préférée sous la forme ou faisant partie d'un composant électrique ou électronique passif ou actif, d'un circuit imprimé, d'une partie d'un circuit imprimé, d'un constituant d'un boîtier, d'une feuille, d'un conducteur, notamment sous la forme d'un interrupteur, d'une fiche, d'une prise, d'un distributeur, d'un relais, d'une résistance, d'un condensateur, d'une bobine ou d'une carcasse de bobine, d'une lampe, d'une diode, d'une LED, d'un transistor, d'un connecteur, d'un circuit intégré (IC), d'un processeur, d'un contrôleur, d'un organe de réglage, d'une mémoire, d'un capteur, d'un élément de fixation destiné à des composants électriques ou électroniques, des circuits imprimés ou des sous-ensembles comme, par exemple, les espaceurs, les boulons, les plinthes, les glissières, les vis et/ou les écrous, d'un socle, d'un connecteur à enfichage, d'une fiche ou d'une prise, d'une charnière à film, d'un crochet à encliquetage (snap-in) et/ou d'une languette élastique.

**15.** Corps moulé selon la revendication 14, **caractérisé en ce qu'**il présente un allongement à la rupture d'au moins 5 %, de préférence d'au moins 6 % et de manière particulièrement préférée de 7 %.

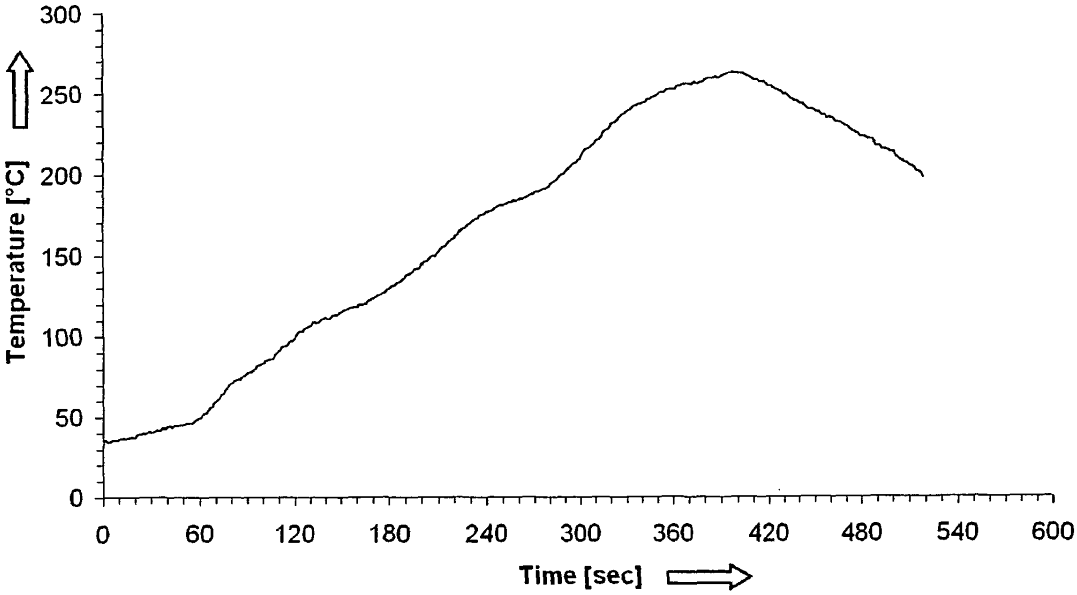
300
250
200
150
100
50
0
Temperature [°C]
0
60
120
180
240
300
360
420
480
540
600
Time [sec]

FIG. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2928325 B
- US 2001003766 A
- EP 1988113 A
- US 3845163 A
- EP 0356978 A2
- DE 103463261